# EUROPEAN PATENT APPLICATION

(11) **EP 1 101 811 A2**
(43) Date of publication of application: **23.05.2001**
(21) Application number: 00123138.0
(22) Date of filing: 25.10.2000
(51) Int. Cl.: C10B 53/00, C10G 1/10

(54) **Process and apparatus for regenerating waste products of high molecular compounds**

(30) Priority: 25.10.1999 JP 30192899
(71) Applicant: Hanyokogyo Kabushiki Kaisha, Shiso-gun, Hyogo-ken (JP)
(72) Inventor: Inaoka, Mitsuhiko, c/o Hanyokogyo K. K., Shiso-gun, Hyogo-ken (JP)
(74) Representative: Schoppe, Fritz, Dipl.-Ing.

(57) **Abstract**

A process and an apparatus for regenerating waste products containing organic compounds without discharging any environmental pollutant, and without releasing any highly explosive exhaust gas includes a tightly closed heating furnace 12 charged with waste products is purged with nitrogen gas, and heated to a temperature causing the thermal decomposition of the waste products. The resulting gas is collected from the furnace, and cooled, so that any combustible substance formed from the waste products may be separated from the gas. The cooled gas is burned at a temperature of at least about 800°C, and the gas which has been burned is cooled to a temperature not exceeding about 200°C, while any environmental pollutant is removed therefrom.

## Description

### BACKGROUND OF THE INVENTION

### 1. Field of the Invention

This invention relates to a process and an apparatus for regenerating waste products containing high molecular compounds, and more particularly, to a process and an apparatus which regenerates waste products containing high molecular compounds, such as tires, or other articles of rubber or plastic materials, without discharging dioxin, or other substances causing environmental pollution in the environment.

### 2. Description of the Prior Art

According to a known process for regenerating waste products containing high molecular compounds, such as tires, or other rubber or plastic articles, oils, fats and carbides are recovered from the waste products by thermal decomposition or cracking. For thermal cracking, waste products have been burned in a thermal cracking furnace by supplying only an amount of air (or oxygen) required to keep the waste products burning, so that the heat of their combustion elevates furnace temperature as required for their cracking. The exhaust gas of the furnace is released into the air after it has been burned again in a combustion furnace with a sufficient supply of oxygen, since it contains vapors of oils and fats separated from the waste products.

The waste products burned in the thermal cracking furnace, however, produce a large amount of black smoke because of the deficiency of oxygen, and the exhaust gas released into the air still contains black smoke even after being burned again in the combustion furnace. The exhaust gas leaving the combustion furnace still has an elevated temperature, and as it is cooled in the air, some of its constituents form dioxin, and the release of the exhaust gas, therefore, introduces dioxin into the environment. Moreover, the exhaust gas containing vapors of oils and fats is susceptible to exploding before it is burned in the combustion furnace, because it contacts air during its transfer from the thermal cracking furnace to the combustion furnace, while it still has an elevated temperature.

### SUMMARY OF THE INVENTION

To overcome the above-described problems, preferred embodiments of the present invention provide a process and an apparatus which regenerates waste products containing organic compounds without generating any environmental pollutant, such as dioxin, and without releasing any highly explosive exhaust gas.

According to a first preferred embodiment of this invention, a process for regenerating waste products containing high molecular compounds includes the steps of placing waste products in a tightly closed heating device, purging the heating device with nitrogen gas, heating the interior of the heating device to a temperature causing the thermal decomposition of the waste products, collecting gas from the heating device through its top and cooling it to separate therefrom any combustible substance formed from the waste products, burning the cooled gas at a temperature not lower than about 800°C; and cooling the burned gas to a temperature not exceeding about 200°C, while removing any environmental pollutant therefrom. The gas leaving the heating device does not burn by self-ignition, or otherwise except when it is burned as stated, nor is it likely that its combustion will include a large amount of substances which will form dioxin. No substance that is likely to form dioxin is burned in a temperature range in which dioxin is formed. The gas does not contain any substance that is likely to form dioxin when burned in a specific temperature range.

The separation of any combustible substance from the gas is preferably carried out by bringing the gas into contact with a pipe through which a cooling medium is caused to flow, and a mesh material attached to the pipe. This method ensures the effective cooling of the gas and thereby the effective separation therefrom of any combustible substance formed from the waste products.

The process preferably includes the step of removing hydrogen and oxygen from the top of the heating device. If no hydrogen or oxygen remains in the top of the heating device, the risk of an explosion caused by the hydrogen or oxygen is eliminated. The hydrogen and oxygen which have been removed from the heating device are preferably burned with the cooled gas, because they support the combustion of the gas effectively.

According to a second preferred embodiment of the present invention, an apparatus for regenerating waste products containing high molecular compounds includes a thermal cracking furnace for heating waste products to a temperature causing their thermal decomposition, a device for supplying nitrogen gas for purging the furnace, a device for cooling gas leaving the furnace for separating therefrom any combustible substance formed from the waste products, a combustion furnace for burning the cooled gas at a temperature not lower than about 800°C, and a device for cooling the burned gas to a temperature not exceeding about 200°C, while purifying it by removing any environmental pollutant therefrom. The gas leaving the thermal cracking furnace does not burn by self-ignition, or otherwise except when it is burned as stated, nor will its combustion include a large amount of substances which will form dioxin. No substance that is likely to form dioxin is burned in a temperature range in which dioxin is formed. The gas does not contain any substance that is likely to form dioxin when burned in a specific temperature range.

The device for cooling the gas leaving the thermal cracking furnace preferably includes a spiral cooling pipe and a mesh material attached to the cooling pipe on both sides of each of its turns. The device ensures the effective cooling of the gas and thereby the effective separation therefrom of any combustible substance formed from the waste products.

The thermal cracking furnace is preferably provided with a device for removing hydrogen and oxygen from its top. If no hydrogen or oxygen stays in the top of the furnace, the risk of an explosion caused by the hydrogen or oxygen is eliminated. The device is preferably connected to the combustion furnace, so that the hydrogen and oxygen removed from the thermal cracking furnace is effectively used to support the combustion of the gas in the combustion furnace.

Other features, elements, characteristics and advantages of preferred embodiments of the present invention will become apparent from the following detailed description of preferred embodiments thereof with reference to the attached drawings.

### BRIEF DESCRIPTION OF THE DRAWINGS

Fig. 1 is a schematic diagram of an apparatus according to a preferred embodiment of the present invention;
Fig. 2 is a schematic elevation, partly in section, of a portion of the apparatus shown in Fig. 1; and
Fig. 3 is a sectional view of a part of a cooling device.

### DETAILED DESCRIPTION OF PREFERRED EMBODIMENTS

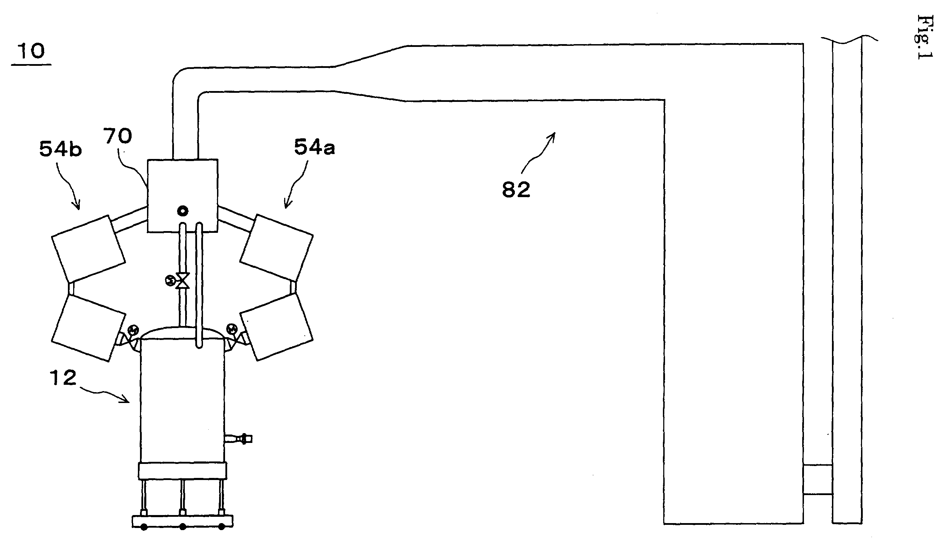

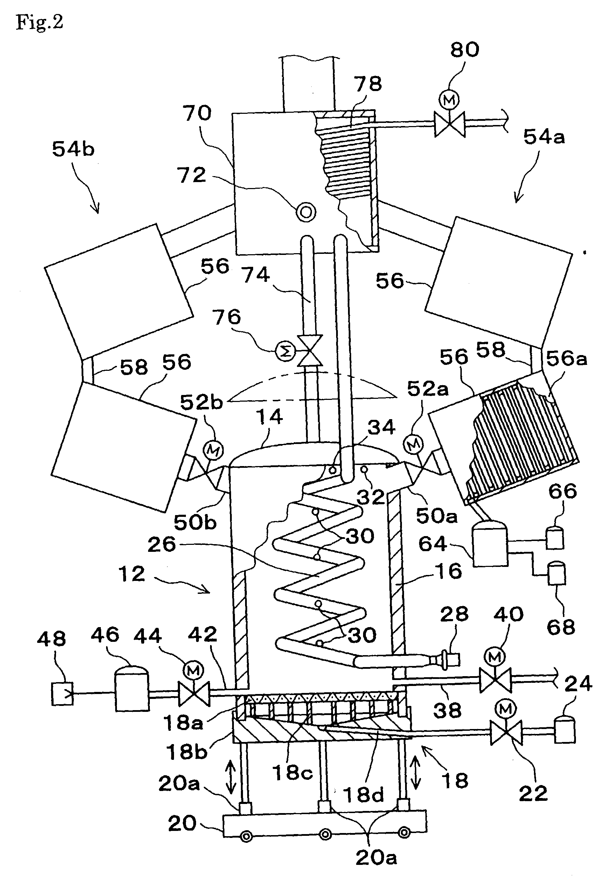

An apparatus according to a preferred embodiment of the present invention is schematically shown in Figs. 1 and 2. It is an apparatus for regenerating waste products of high molecular compounds, and among others, tire chips. The apparatus 10 includes a substantially cylindrical
thermal cracking furnace 12 having a top cover 14 closing the top opening of a furnace body 16. The top cover 14 is vertically movable to open the top of the furnace body 16, as shown by broken lines in Fig. 2, so that the furnace 12 may be charged with tire chips. The furnace 12 also has a bottom cover 18 supported by a plurality of jacks 20a on a truck 20 vertically movably for closing or opening the furnace body 12 at its bottom.

The bottom cover 18 has a mesh portion 18a and a bottom plate portion 18b. The mesh portion 18a is used to carry tire chips thereon, and is produced from a cast, or otherwise prepared, mesh material, so that the oils and fats resulting from the thermal decomposition of tire chips quickly drop therethrough onto the underlying bottom plate portion 18b. The mesh portion 18a is spaced apart from the upper surface of the bottom plate portion 18b by beams 18c, so that no char on the mesh portion 18a mixes with the oils and fats which have dropped therefrom. The upper surface of the bottom plate portion 18b is concave, so that the oils and fats which have dropped from the mesh portion 18a are collected in the center portion of the bottom plate portion 18b. The bottom plate portion 18b has a waste oil passage 18d extending from the center portion of its upper surface to its periphery. The waste oil passage 18d is connected to an oil and fat tank 24 and a valve 22 is provided therebetween. The oils and fats which have been collected on the upper surface of the bottom plate portion 18b are, therefore, conveyed into the oil and fat tank 24 when the valve 22 is opened.

A spiral heating pipe 26 is vertically mounted in the furnace body 16. The heating pipe 26 has a lower end projecting through the side wall of the furnace body 16 near its bottom and connected to a burner 28. When the burner 28 is ignited, combustion gas flows through the heating pipe 26 for heating the inside of the furnace 12. The heating pipe 26 has an upper end projecting through the side wall of the furnace body 16 near its top and connected to a combustion furnace 70 which will be described later.

A plurality of nitrogen concentration meters 30 are provided in the furnace body 16 at different height levels. The furnace body 16 is further provided at its top with an oxygen concentration meter 32 and a hydrogen concentration meter 34, as well as SO₂, CO₂ and NO₂ concentration meters, a pressure gauge and a thermometer which are not shown. These instruments are used for determining the conditions in the furnace 12 during the thermal decomposition of tire chips, and their functions will be described in detail when the operation of the apparatus is described.

A nitrogen gas supplying pipe 38 is connected to the side wall of the furnace body 16 near its bottom. The pipe 38 has an automatic valve 40 and extends from a source of nitrogen supply not shown, such as a nitrogen bottle, to supply nitrogen gas for purging the furnace 12 upon opening of the valve 40. A char discharge pipe 42 is also connected to the side wall of the furnace body 16 near its bottom. The pipe 42 has an automatic valve 44 and extends to a char tank 46 provided with an evacuating device 48. The char collected on the mesh portion 18a as a result of thermal decomposition is drawn out into the char tank 46 by operating the evacuating device 48 and opening the valve 44. The char not drawn out by the evacuating device 48, if any, is removed by using, for example, an appropriate suction device not shown after lowering the bottom cover 18.

A pair of gas discharge ports 50a and 50b are provided in the side wall of the furnace body 16 near its top in a substantially diametrically opposed relation to each other. The gas discharge ports 50a and 50b are connected to a pair of cooling columns 54a and 54b, respectively, via automatic valves 52a and 52b, respectively, such that the gas leaving the furnace 12 is discharged into the cooling columns 54a and 54b if the valves 52a and 52b are opened. The cooling columns 54a and 54b are of the same construction, and only the cooling column 54a will, therefore, be described below.

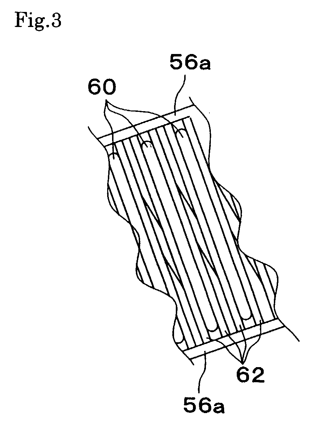

The cooling column 54a has two vertically spaced apart cooling compartments 56 inclined in different directions from each other and connected to each other by a connecting passage 58. Each cooling compartment 56 has a substantially cylindrical casing 56a. A spiral cooling pipe 60 is located in the casing 56a and extends longitudinally thereof, as shown in Fig. 3. The cooling pipe 60 has its upper and lower ends projecting through the side wall of the casing 56a and connected to the outlet and inlet, respectively, of a pump not shown, so that cooling water may be circulated through it as a cooling medium. A mesh material 62 is attached to the pipe 60 on both sides of each of its turns, as shown in Fig. 3. The mesh material 62 gives the cooling pipe 60 an enlarged area of contact with the gas arriving from the furnace 12 and more effectively cools the gas and thereby more effectively separates therefrom any combustible oils and fats, and water resulting from the thermal decomposition of tire chips. The oils and fats, and water which have been separated from the gas drop along the inner wall surface of the cooling compartment 56, exit the cooling compartment 56 through a port provided at the bottom of the side wall of its casing 56a, and are collected in a separation tank 64 in which they are separated from each other for storage in an oil tank 66 and a water tank 68, respectively.

Each of the cooling columns 54a and 54b has an upper end connected to the combustion furnace 70. The combustion furnace 70 is provided with a burner 72 in its side wall for the perfect combustion of any oils and fats not removed from the gas in the cooling columns 54a and 54b. A hydrogen and oxygen discharge pipe 74 is connected between the top of the thermal cracking furnace 12 and the side wall of the combustion furnace 70. The pipe 74 is provided for collecting any hydrogen and oxygen staying in the top of the thermal cracking furnace 12, and supplying them to the combustion furnace 70 to support combustion therein. The pipe 74 has an automatic valve 76 that is open to transfer hydrogen and oxygen from the top of the thermal cracking furnace 12 to the combustion furnace 70. Therefore, the risk of an explosion caused by the hydrogen or oxygen in the thermal cracking furnace 12 is eliminated.

A vapor generating pipe 78 is spirally mounted in the combustion furnace 70 in contact with its inner wall surface. The pipe 78 generates vapor therein by utilizing the heat of the combustion furnace 70. The pipe 78 is connected to a gas purifying and cooling tower 82 via an automatic valve 80 for supplying vapor to it when the valve 80 is opened. The vapor supplied to the tower 82 is used for actuating a wet type active carbon filter contained therein, but not shown.

The combustion furnace 70 is connected at its top to the gas purifying and cooling tower 82. The tower 82 is provided for lowering the temperature of the combustion gas exiting the combustion furnace 70 by reducing its pressure, as well as purifying it by removing environmental pollutants, such as sulfur dioxide, zinc and dust, therefrom by using an appropriate exhaust gas purifying device, such as a wet or dry type active carbon filter, or a dust collector of cloth. The tower 82 terminates at an end open to the air and exhausts the combustion gas having its pressure reduced to substantially the atmospheric level.

Description will now be provided of the thermal cracking operation of the apparatus described above. The top cover 14 is opened, and the thermal cracking furnace 12 is charged with a desired amount of tire chips by a conveyor not shown. The top cover 14 is replaced to close the furnace. The automatic valve 40 is opened to introduce nitrogen gas into the furnace 12, while the automatic valves 52a and 52b are also opened to remove air from the furnace 12 through the gas discharge ports 50a and 50b. If the nitrogen concentration meters 30 located at different height levels indicate that all of the air in the furnace 12 has been replaced by nitrogen gas, the valve 40 is closed to discontinue the introduction of nitrogen gas, while the valves 52a and 52b are closed to close the furnace 12.

The burner 28 is ignited to heat the interior of the furnace 12 to a predetermined temperature for the thermal decomposition of the tire chips. As the waste products to be thermally decomposed are tire chips obtained by cutting used tires into small pieces, the furnace 12 is heated to a temperature of about 350°C to about 390°C at which synthetic rubber thermally decomposes. The temperature of the furnace 12 is controlled by introducing nitrogen gas thereinto and adjusting the force of the flame produced by the burner 28. When the pressure in the furnace 12 increases as a result of the introduction of nitrogen gas and its rise in temperature, gas is discharged from the furnace 12 into the cooling columns 54a and 54b to reduce its pressure to protect it from any damage.

When the furnace 12 is filled with a desired amount of oils and fats produced by the thermal decomposition of the tire chips and vaporized under heat, gas is discharged from the furnace 12 into the cooling columns 54a and 54b through the gas discharge ports 50a and 50b. The amounts of oxygen and SO₂ occurring in large quantities upon vaporization of oils and fats are determined by the oxygen and SO₂ concentration meters as a measure of the amount of vapors of oils and fats in the furnace 12. As the removal of gas from the furnace 12 brings about a drop in pressure, the valve 40 is opened to introduce nitrogen gas into the furnace 12 to prevent any large drop in pressure that will allow air to flow into the furnace 12 and ignite the tire chips.

The oxygen and hydrogen arising from the tire chips stay in the top of the furnace 12 without being removed with the gas discharged through the ports 50a and 50b into the cooling columns 54a and 54b, as they are, being heated, lower in specific gravity than the introduced nitrogen. The oxygen and hydrogen staying in the furnace 12 are susceptible to cause an explosion. The concentrations of oxygen and hydrogen in the furnace 12 are, therefore, are measured by the oxygen and hydrogen concentration meters 32 and 34 located in the top of the furnace 12, and if they reach a certain level, oxygen and hydrogen are discharged into the combustion furnace 70 through the discharge pipe 74. They are burned to support combustion in the combustion furnace 70. As the discharge of oxygen and hydrogen into the combustion furnace 70 also brings about a pressure reduction in the thermal cracking furnace 12, nitrogen gas is introduced into the furnace 12 to maintain a certain level of pressure therein for the reason as stated before.

The gas which has entered the cooling columns 54a and 54b is cooled in the cooling compartments 56, whereby oils, fats and water are removed from it, and the gas flows out into the combustion furnace 70. The gas which has entered the combustion furnace 70 is burned by the burner 72 at a temperature of about 800°C to about 850°C. The oils and fats not removed in the cooling columns 54a and 54b, if any, are also burned together. A thermometer installed in the combustion furnace 70, though not shown, ensures that the gas always burns at a temperature of about 800°C to about 850°C, so that no dioxin may be produced.

The gas which has been burned in the combustion furnace 70 flows out into the gas purifying and cooling tower 82 and is cooled to a temperature not exceeding about 200°C, while environmental pollutants, such as sulfur dioxide, zinc and dust, are removed therefrom, whereafter the gas is discharged into the air. No dioxin is produced when the gas is cooled, since it no longer contains any substance that is likely to form dioxin in a specific temperature range. Therefore, there is no scattering or discharge of any dioxin, or any other pollutant into the environment.

Further, the char produced by the thermal decomposition of the tire chips is drawn out by the evacuating device 48 and extracted from the thermal cracking furnace 12 as described above.

The thermal cracking furnace 12 may be fed with a new charge of tire chips to continue another cycle of thermal cracking operation.

While the invention has been described as being preferably used for the regeneration of tire chips, or waste rubber products, it can also be used for regenerating waste products of plastic materials. It is, of course, necessary or desirable to select the optimum cracking furnace temperature for the waste products to be decomposed.

According to a process and an apparatus for regenerating waste products containing high molecular compounds in various preferred embodiments of the present invention, disused tires can be regenerated without discharging environmental pollutants such as dioxin and dioxide into the environment.

It should be understood that the foregoing description is only illustrative of preferred embodiments of the present invention. Various alternatives and modifications can be devised by those skilled in the art without departing from the present invention. Accordingly, the present invention is intended to embrace all such alternatives, modifications and variations that fall within the scope of the appended claims.

## Claims

1. A process for regenerating waste products containing high molecular compounds comprising the steps of:
placing waste products in a tightly closed heating device (12);
purging said heating device (12) with nitrogen gas;
heating the interior of said heating device (12) to a temperature causing the thermal decomposition of the waste products;
collecting gas from said heating device (12) through its top portion and cooling it to separate therefrom any combustible substance formed from the waste products;
burning said cooled gas at a temperature of at least about 800°C; and
cooling said burned gas to a temperature of about 200°C or less, while removing any environmental pollutant therefrom.

2. A process according to claim 1, wherein said gas collected from said heating device (12) is cooled by bringing it into contact with a pipe 60 through which a cooling medium is caused to flow and a mesh material (62) attached to said pipe.

3. A process according to claim 1 or 2, further including the step of removing hydrogen and oxygen from the top of said heating device (12).

4. A process according to claim 3, wherein said hydrogen and oxygen are burned with said cooled gas.

5. An apparatus for regenerating waste products containing high molecular compounds which comprises:
a thermal cracking furnace (12) arranged to heat waste products to a temperature causing their thermal decomposition;
a device (38, 40) to supply nitrogen gas for purging said furnace;
at least one cooling device (54a, 54b) arranged to cool gas leaving said furnace for separating therefrom any combustible substance formed from the waste products;
a combustion furnace (70) arranged to burn said cooled gas at a temperature of at least about 800°C; and
a cooling tower (82) arranged to cool said burned gas to a temperature of about 200°C at maximum, while purifying it by removing any environmental pollutant therefrom.

6. An apparatus according to claim 5, wherein said at least one cooling device (54a, 54b) comprises a spiral cooling pipe (60) and a mesh material (62) attached to said pipe on both sides of each of its turns.

7. An apparatus according to claim 5 or 6, wherein said cracking furnace (12) has a device (74, 76) arranged to discharge hydrogen and oxygen from its top portion.

8. An apparatus according to claim 7, wherein said discharge device (74, 76) is connected to said combustion furnace (70).
